# EUROPÄISCHE PATENTSCHRIFT

(11) **EP 0 879 724 B1**
(45) Veröffentlichungstag und Bekanntmachung des Hinweises auf die Patenterteilung: **22.10.2003**
(21) Anmeldenummer: 98109039.2
(22) Anmeldetag: 18.05.1998
(51) Int. Cl.: B60K 11/02

(54) **Flurförderzeug mit einem elektrischen Aggregrat**
Industrial truck with electric drive
Chariot de manutention avec appareillage électrique

(30) Priorität: 22.05.1997 DE 19721526
(43) Veröffentlichungstag der Anmeldung: 25.11.1998
(73) Patentinhaber: STILL GMBH, D-22113 Hamburg (DE)
(72) Erfinder: Fromme, Georg, Dr.-Ing., 21217 Seevetal 2 (DE); Mittmann, Hans-Georg, Dipl.-Ing., 21465 Wentdorf (DE)
(74) Vertreter: Kasseckert, Rainer

(56) Entgegenhaltungen:
- EP-A- 0 484 548
- DE-A- 3 941 474
- DE-A- 4 417 432

## Beschreibung

Die Erfindung betrifft ein Flurförderzeug mit einem im Frontbereich angeordneten Hubgerüst, einem im Heckbereich angeordneten Gegengewicht, einer mindestens ein elektrisches Aggregat aufweisenden Fahrantriebsanordnung und einer Kühlvorrichtung für das elektrische Aggregat, wobei als elektrisches Aggregat mindestens ein elektrischer Motor und mindestens ein Umrichter vorgesehen ist und ein Rotor des elektrischen Motors mechanisch an ein Fahrantriebsrad des Flurförderzeugs gekoppelt ist.

Flurförderzeuge der genannten Art, bei denen eine Fahrantriebsanordnung mindestens ein elektrisches Aggregat aufweist, sind als batteriebetriebene Flurförderzeuge oder als verbrennungsmotorisch angetriebene Flurförderzeuge bekannt. Hierbei ist als erstes elektrisches Aggregat mindestens ein elektrischer Fahrantriebsmotor vorgesehen, der mit den Antriebsrädern des Flurförderzeugs direkt oder indirekt verbunden ist. Batteriebetriebene Flurförderzeug sind mit einer Batterie ausgerüstet, welche die elektrische Energie für die Fahrantriebsmotoren zur Verfügung stellt. Bei verbrennungsmotorisch angetriebenen Flurförderzeugen ist als weiteres elektrisches Aggregat ein elektrischer Generator vorgesehen, der mit einem Verbrennungsmotor verbunden ist und die elektrische Energie für den Fahrantrieb des Flurförderzeugs erzeugt.

Die Fahrantriebsmotoren sind hierbei als Gleichstrommotoren oder als Drehstrommotoren ausgeführt. Bei der Verwendung von Drehstrommotoren ist diesen ein Umrichter vorgeschaltet, der ein zusätzliches elektrisches Aggregat darstellt.

Aus der DE 44 17 432 A1 ist eine wassergekühlte Einheit einer elektrischen Steuerung und eines Antriebsmotors für ein Elektromobil bekannt, wobei der Motor an einem Fahrzeugrahmen befestigt ist und über Radantriebswellen mit den Rädern des Elektromobils verbunden ist. Die DE 39 41 474 A1 offenbart einen mit Öl oder Wasser gekühlten elektrischen Generator, der Teil eines Motor- oder Getriebeblocks eines Fahrzeugs ist.

Bei bekannten Flurförderzeugen der genannten Art ist für die genannten elektrischen Aggregate eine Luftkühlung vorgesehen. Die elektrischen Motoren und Generatoren sind hierbei in der Regel innenbelüftet, werden also von Kühlluft durchströmt, womit Wärme aus dem Inneren der elektrischen Maschine abgeführt wird. Der gegebenenfalls vorhandene Umrichter ist ebenfalls in einem Kühlluftstrom angeordnet.

Diese Anordnung beinhaltet den Nachteil, daß die elektrischen Aggregate infolge des Kühlluftstroms verschiedenen Umwelteinflüssen, z.B. Staub oder Feuchtigkeit, ausgesetzt sind. Darüber hinaus werden für die Luftkühlung verschiedene großvolumige Bauteile, z.B. Gebläse, Luftschläuche oder Filteranordnungen benötigt, die einerseits wertvollen Bauraum benötigen und andererseits auch einer willkürlichen Anordnung der elektrischen Aggregate entgegenstehen.

Der vorliegenden Erfindung liegt die Aufgabe zugrunde, eine Kühlvorrichtung für ein als Elektromotor ausgeführtes elektrisches Aggregat eines Flurförderzeugs zur Verfügung zu stellen, die eine ausreichende Wärmeabfuhr aus dem Aggregat sicherstellt und das in zweckmäßiger Weise im Flurförderzeug angeordnet ist.

Diese Aufgabe wird bei einem gattungsgemäßen Flurförderzeug erfindungsgemäß dadurch gelöst, daß der elektrische Motor in einer Antriebsachse des Flurförderzeugs angeordnet ist, ein Gehäuse des Umrichters mit der Antriebsachse verbunden ist und die Kühlvorrichtung für die elektrischen Aggregate ein flüssiges Kühlmedium aufweist. Durch die Verwendung eines flüssigen Kühlmediums kann die Kühlvorrichtung mit kleinen äußeren Abmessungen ausgeführt werden. Das flüssige Kühlmedium weist, verglichen mit der bisher gebräuchlichen Kühlluft, eine hohe Wärmekapazität auf. Weiterhin können die verschiedenen elektrischen Aggregate nahezu beliebig in dem Flurförderzeug angeordnet werden. Der elektrische Motor ist im Bereich einer Achse des Flurförderzeug angeordnet. Das flüssige Kühlmedium wird dem elektrischen Motor vorzugsweise über flexible Schlauchleitungen zu- und wieder abgeführt. Die bei der Umrichtung von Gleichstrom in Drehstrom, oder umgekehrt, anfallenden Verlustleistungen werden ebenfalls mittels der erfindungsgemäßen Kühlvorrichtung abgeführt.

Als weiteres elektrisches Aggregat kann auch mindestens ein elektrischer Generator vorgesehen sein.

Zweckmäßig ist es, wenn an einem Gehäuse des elektrischen Generators und/oder an einem Gehäuse des elektrischen Motors mindestens ein Kanal für das flüssige Kühlmedium angeordnet ist. Aus dem Generator bzw. aus dem Motor wird dabei Wärme über das Gehäuse abgeführt. Hierbei ist sichergestellt, daß kein Kühlmedium in das Innere des Generators bzw. des Motors gelangt, wodurch Verunreinigungen und Beschädigungen durch Staub oder Feuchtigkeit ausgeschlossen sind.

In einer zweckmäßigen Ausgestaltung sind der elektrische Generator und/oder der elektrische Motor als Drehstromgenerator bzw. als Drehstrommotor ausgeführt. Im Inneren einer Drehstrommaschine fällt eine vergleichsweise geringe Wärmeentwicklung an. Aus diesem Grund erweist sich für Drehstrommaschinen die oben beschriebene Kühlung über das Gehäuse als besonders zweckmäßig, zumal für den Rotor der Drehstrommaschine relativ hohe Betriebstemparaturen zulässig sind.

Weiterhin zweckmäßig ist es, wenn ein Rotor des elektrischen Generators mechanisch an eine Kurbelwelle eines Verbrennungsmotors gekoppelt ist. Die mit dem Verbrennungsmotor erzeugte mechanische Energie wird mittels des Generators in elektrische Energie umgewandelt.

Vorteilhaft ist es weiterhin, wenn das Kühlmedium der Kühlvorrichtung für das elektrische Aggregat von einer Kühlflüssigkeit des Verbrennungsmotors gebildet wird. Der Verbrennungsmotor weist einen Kühlkreislauf mit einem überwiegend aus Wasser bestehenden Kühlmedium auf. Dieses Kühlmedium wird erfindungsgemäß ebenfalls zur Kühlung des elektrischen Aggregats (Generator und/oder Motor und/oder Umrichter) verwendet. Das Kühlmedium gibt die aufgenommene Wärme über einen Wärmetauscher, wie er im Kühlkreislauf des Verbrennungsmotors ohnehin vorhanden ist, an die Umgebung ab.

Gemäß einer anderen vorteilhaften Ausgestaltung der Erfindung wird das Kühlmedium der Kühlvorrichtung für das elektrische Aggregat von einem Arbeitsmedium einer Hydraulikanlage gebildet. Beispielsweise für einen hydraulischen Hubzylinder weisen Flurförderzeuge stets eine Hydraulikanlage auf. Das Arbeitsmedium dieser Hydraulikanlage, in der Regel Hydrauliköl, wird als Kühlmedium für das elektrische Aggregat eingesetzt.

Zweckmäßig ist es, wenn ein von dem Kühlmedium der Kühlvorrichtung für das elektrische Aggregat durchströmter Wärmetauscher vorgesehen ist Der Wärmetauscher gibt die von dem Kühlmittel aufgenommene Wärme an die Umgebung ab. Wenn das Arbeitsmedium der Hydraulikanlage als Kühlmedium vorgesehen ist, kann als Wärmetauscher ein Ölkühler verwendet werden.

Mit besonderem Vorteil sind ein Gehäuse mindestens eines Umrichters und ein Gehäuse des elektrischen Generators miteinander verbunden. Ebenso vorteilhaft ist es, wenn ein Gehäuse mindestens eines Umrichters und ein Gehäuse mindestens eines elektrischen Motors miteinander verbunden sind. Durch die Verbindung von Gehäuseteilen wird die Anzahl der für die Kühlvorrichtung benötigten Bauteile reduziert.

Weitere Vorteile und Einzelheiten der Erfindung werden anhand des in den schematischen Figuren dargestellten Ausführungsbeispiels näher erläutert. Dabei zeigt
- Figur 1: eine erfindungsgemäßes Flurförderzeug,
- Fig. 2 und Fig. 3: erfindungsgemäße elektrische Maschinen.

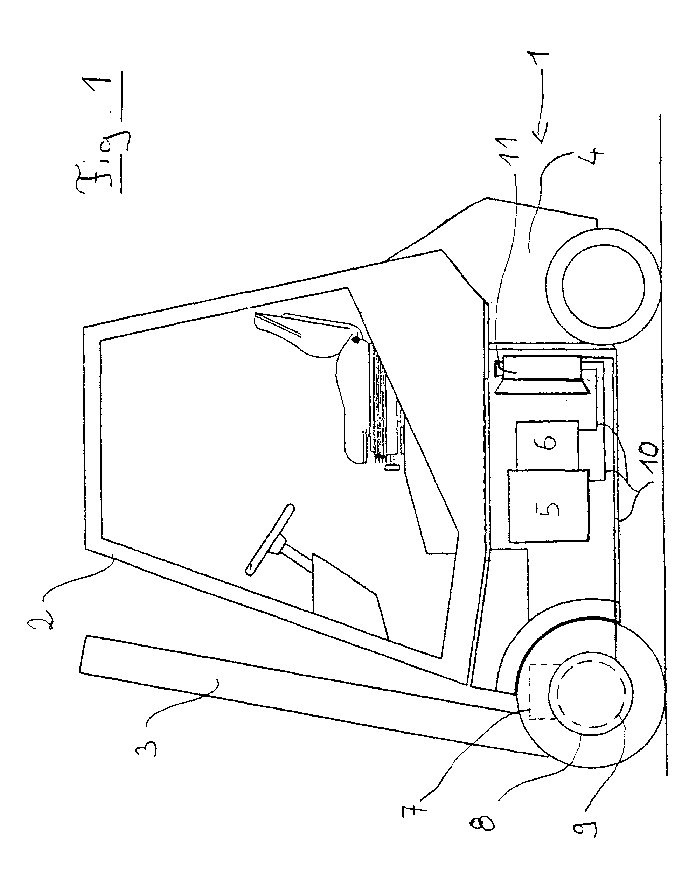

In Figur 1 ist als erfindungsgemäßes Flurförderzeug ein Gabelstapler dargestellt. Zu erkennen sind ein Fahrzeugrahmen 1, auf dem eine Fahrerkabine 2 angeordnet ist.

Im Frontbereich des Flurförderzeugs ist ein Hubgerüst 3 befestigt, an dem eine nicht dargestellte Lastaufnahmevorrichtung befestigbar ist. Das Heck des Flurförderzeugs wird von einem Gegengewicht 4 gebildet.

Die verschiedenen Aggregate der Fahrantriebsanordnung für das Flurförderzeug sind im Bereich des Rahmens 1 des Flurförderzeugs angeordnet und sind in der Figur schematisch dargestellt. Die Fahrantriebsanordnung umfaßt einen Verbrennungsmotor 5, der mit einem elektrischen Generator 6 verbunden ist. Der in diesem Ausführungsbeispiel als Drehstromgenerator ausgeführte Generator 6 überträgt die erzeugte elektrische Energie über eine nicht dargestellte elektrische Leitung zu einem Umrichter 7, der einen Gleichrichter, eine elektronische Steuereinheit und einen Wechselrichter umfaßt. Der Umrichter 7 ist mit einem Gehäuse einer Antriebsachse 8 verbunden, in welcher ein Fahrantriebsmotor 9, vorzugsweise ein Asynchronmotor, des Flurförderzeugs angeordnet ist.

Der Verbrennungsmotor 5, der Generator 6, der Umrichter 7 sowie der elektrische Motor 9 weisen erfindungsgemäß eine gemeinsame Kühlvorrichtung mit einem flüssigen Kühlmedium auf. Kühlmittelleitungen 10 führen von einem Wärmetauscher 11 der Kühlvorrichtung zu dem Verbrennungsmotor 5, zum Generator 6 sowie zur Antriebsachse 8. Mittels des Wärmetauschers wird die von dem Kühlmedium aus den Aggregaten abgeführte Wärme an die Umgebung abgegeben. Die Anordnung des Umrichters an der Antriebsachse 8 vermindert die Anzahl der benötigten Kühlmittelleitungen, da der elektrische Motor 9 ebenfalls im Bereich der Antriebsachse 8 angeordnet ist.

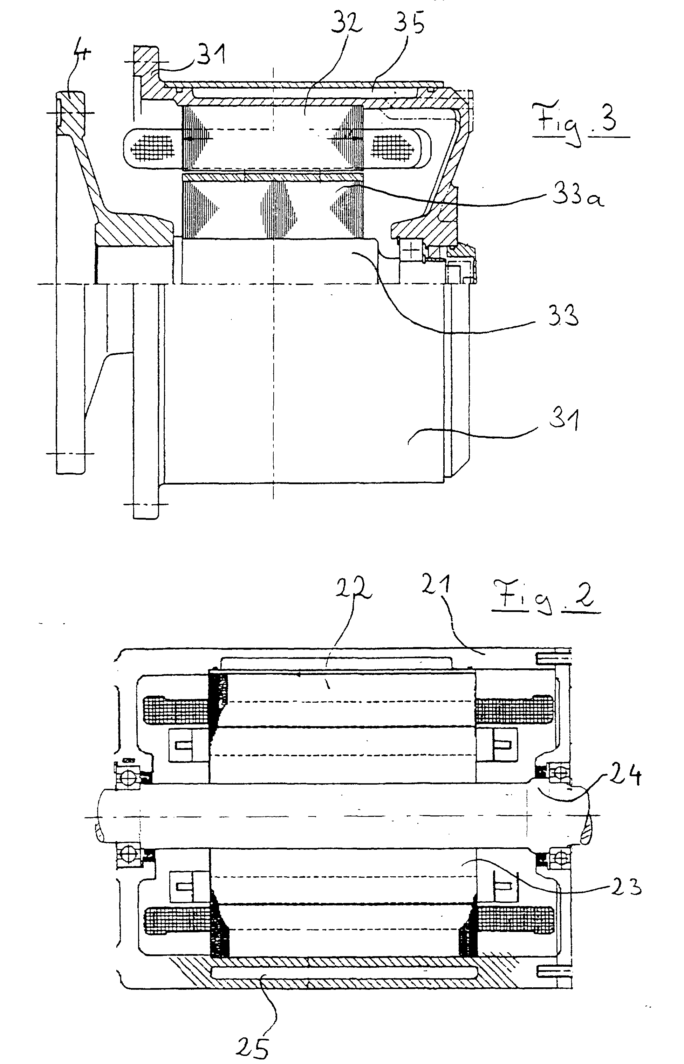

Die Figuren 2 und 3 zeigen zwei an sich bekannte elektrische Drehstrommaschinen, die für die Verwendung in einem erfindungsgemäßen Flurförderzeug geeignet sind. Drehstrommaschinen werden hierbei als elektrische Motoren und als Generatoren verwendet.

Figur 2 zeigt einen Drehstrom-Asynchronmotor, bei dem an einem nicht drehbaren Gehäuse 21 eine Statorwicklung 22 befestigt ist. Ein als Käfigläufer ausgeführter Rotor 23 ist drehstarr mit einer Welle 24 verbunden, die gegenüber dem Gehäuse 21 drehbar gelagert.

Das Gehäuse weist im Bereich der Statorwicklung 22 einen sich über den Umfang des Gehäuses 21 erstreckenden Kühlmittelkanal 25 auf. Insbesondere die im Bereich der Statorwicklung 22 entstehende Wärme wird mit dem den Kühlmittelkanal 25 durchströmenden Kühlmedium aus der elektrischen Maschine abgeführt.

In Figur 3 ist eine entsprechende Anordnung für einen Drehstrom-Synchrongenerator dargestellt. Ein Rotor 33 des Generators ist mit einem Flansch 34 beispielsweise mit einer Kurbelwelle eines Verbrennungsmotors verbindbar. Der Rotor 33 umfaßt ein Blechpaket 33a mit aufgesetzten Permanentmagneten. Auch bei dieser Maschine ist an einem Gehäuse 31 im Bereich einer Statorwicklung 32 ein umlaufender Kühlmittelkanal 35 angeordnet, der von einem Kühlmedium durchströmt wird. Vor allem die in der Statorwicklung 32 entstehende Wärmeenergie wird bei dieser Anordnung von dem Kühlmedium aufgenommen.

## Patentansprüche

1. Flurförderzeug mit einem im Frontbereich angeordneten Hubgerüst (3), einem im Heckbereich angeordneten Gegengewicht (4), einer mindestens ein elektrisches Aggregat aufweisenden Fahrantriebsanordnung und einer Kühlvorrichtung für das elektrische Aggregat, wobei als elektrisches Aggregat mindestens ein elektrischer Motor (9) und mindestens ein Umrichter vorgesehen ist und ein Rotor (23, 33) des elektrischen Motors (9) mechanisch an ein Fahrantriebsrad des Flurförderzeugs gekoppelt ist, **dadurch gekennzeichnet, daß** der elektrische Motor (9) in einer Antriebsachse (8) des Flurförderzeugs angeordnet ist, ein Gehäuse des Umrichters (7) mit der Antriebsachse (8) verbunden ist und die Kühlvorrichtung für die elektrischen Aggregate ein flüssiges Kühlmedium aufweist.

2. Flurförderzeug nach Anspruch 1, **dadurch gekennzeichnet, daß** als weiteres elektrisches Aggregat mindestens ein elektrischer Generator (6) vorgesehen ist.

3. Flurförderzeug nach Anspruch 2 **dadurch gekennzeichnet, daß** an einem Gehäuse des elektrischen Generators (6) und/oder an einem Gehäuse des elektrischen Motors (9) mindestens ein Kanal für das flüssige Kühlmedium angeordnet ist.

4. Flurförderzeug nach einem der Ansprüche 2 bis 3, **dadurch gekennzeichnet, daß** der elektrische Generator (6) und/oder der elektrische Motor (9) als Drehstromgenerator bzw. als Drehstrommotor ausgeführt sind.

5. Flurförderzeug nach einem der Ansprüche 2 bis 4, **dadurch gekennzeichnet, daß** ein Rotor (23, 33) des elektrischen Generators (6) mechanisch an eine Kurbelwelle eines Verbrennungsmotors gekoppelt ist.

6. Flurförderzeug nach einem der Ansprüche 1 bis 5, **dadurch gekennzeichnet, daß** das Kühlmedium der Kühlvorrichtung für das elektrische Aggregat von einer Kühlflüssigkeit eines Verbrennungsmotors (5) gebildet wird.

7. Flurförderzeug nach einem der Ansprüche 1 bis 5, **dadurch gekennzeichnet, daß** das Kühlmedium der Kühlvorrichtung für das elektrische Aggregat von einem Arbeitsmedium einer Hydraulikanlage gebildet wird.

8. Flurförderzeug nach einem der Ansprüche 1 bis 7, **dadurch gekennzeichnet, daß** ein von dem Kühlmedium der Kühlvorrichtung für das elektrische Aggregat durchströmter Wärmetauscher (11) vorgesehen ist.

9. Flurförderzeug nach einem der Ansprüche 2 bis 8, **dadurch gekennzeichnet, daß** ein Gehäuse mindestens eines Umrichters (7) und ein Gehäuse des elektrischen Generators (6) miteinander verbunden sind.

10. Flurförderzeug nach einem der Ansprüche 1 bis 9, **dadurch gekennzeichnet, daß** ein Gehäuse mindestens eines Umrichters (7) und ein Gehäuse mindestens eines elektrischen Motors (9) miteinander verbunden sind.

## Claims

1. Industrial truck having a lifting frame (3) arranged in the front area, a counterweight (4) arranged in the rear area, a traction drive arrangement having at least one electric unit and a cooling apparatus for the electric unit, at least one electric motor (9) and at least one converter being provided as the electric unit, and a rotor (23, 33) of the electric motor (9) being coupled mechanically to a traction drive wheel of the industrial truck, **characterized in that** the electric motor (9) is arranged in a drive axle (8) of the industrial truck, a housing of the converter (7) is connected to the drive axle (8) and the cooling apparatus for the electric units has a liquid cooling medium.

2. Industrial truck according to Claim 1, **characterized in that** at least one electric generator (6) is provided as a further electric unit.

3. Industrial truck according to Claim 2, **characterized in that** at least one channel for the liquid cooling medium is arranged on a housing of the electric generator (6) and/or on a housing of the electric motor (9).

4. Industrial truck according to either of Claims 2 and 3, **characterized in that** the electric generator (6) and/or the electric motor (9) are/is designed as a three-phase generator and a three-phase motor, respectively.

5. Industrial truck according to one of Claims 2 to 4, **characterized in that** a rotor (23, 33) of the electric generator (6) is coupled mechanically to a crankshaft of an internal combustion engine.

6. Industrial truck according to one of Claims 1 to 5, **characterized in that** the cooling medium of the cooling apparatus for the electric unit is formed by a cooling liquid of an internal combustion engine (5).

7. Industrial truck according to one of Claims 1 to 5, **characterized in that** the cooling medium of the cooling apparatus for the electric unit is formed by an operating medium of a hydraulic system.

8. Industrial truck according to one of Claims 1 to 7, **characterized in that** a heat exchanger (11) is provided, through which the cooling medium of the cooling apparatus for the electric unit flows.

9. Industrial truck according to one of Claims 2 to 8, **characterized in that** a housing of at least one converter (7) and a housing of the electric generator (6) are connected to each other.

10. Industrial truck according to one of Claims 1 to 9, **characterized in that** a housing of at least one converter (7) and a housing of at least one electric motor (9) are connected to each other.

## Revendications

1. Chariot de manutention comprenant une structure de levage (3) disposée dans une partie avant, un contrepoids (4) disposé dans une partie arrière, un agencement d'entraînement de conduite présentant au moins un appareillage électrique et un dispositif de refroidissement pour l'appareillage électrique, au moins un moteur électrique (9) et au moins un onduleur étant prévus en tant qu'appareillage électrique et un rotor (23, 33) du moteur électrique (9) étant accouplé mécaniquement à une roue d'entraînement de conduite du chariot de manutention,
**caractérisé en ce que**
le moteur électrique (9) est disposé dans un axe d'entraînement (8) du chariot de manutention, un boîtier de l'onduleur (7) est connecté à l'axe d'entraînement (8) et le dispositif de refroidissement pour les appareillages électriques présente un réfrigérant liquide.

2. Chariot de manutention selon la revendication 1, **caractérisé en ce qu'**au moins un générateur électrique (6) est prévu en tant qu'appareillage électrique supplémentaire.

3. Chariot de manutention selon la revendication 2, **caractérisé en ce qu'**au moins un conduit pour le réfrigérant liquide est prévu sur un boîtier du générateur électrique (6) et/ou sur un boîtier du moteur électrique (9).

4. Chariot de manutention selon l'une quelconque des revendications 2 à 3, **caractérisé en ce que** le générateur électrique (6) et/ou le moteur électrique (9) sont réalisés sous forme d'un générateur triphasé ou de moteur triphasé.

5. Chariot de manutention selon l'une quelconque des revendications 2 à 4, **caractérisé en ce qu'**un rotors (23, 33) du générateur électrique (6) est accouplé mécaniquement à un vilebrequin d'un moteur à combustion interne.

6. Chariot de manutention selon l'une quelconque des revendications 1 à 5, **caractérisé en ce que** le réfrigérant du dispositif de refroidissement pour l'appareillage électrique est formé par un liquide de refroidissement d'un moteur à combustion interne (5).

7. Chariot de manutention selon l'une quelconque des revendications 1 à 5, **caractérisé en ce que** le réfrigérant du dispositif de refroidissement pour l'appareillage électrique est formé par un fluide de travail d'une installation hydraulique.

8. Chariot de manutention selon l'une quelconque des revendications 1 à 7, **caractérisé en ce qu'**il est prévu un échangeur de chaleur (11) parcouru par le réfrigérant du dispositif de refroidissement pour l'appareillage électrique.

9. Chariot de manutention selon l'une quelconque des revendications 2 à 8, **caractérisé en ce qu'**un boîtier d'au moins un onduleur (7) et un boîtier du générateur électrique (6) sont raccordés l'un à l'autre.

10. Chariot de manutention selon l'une quelconque des revendications 1 à 9, **caractérisé en ce qu'**un boîtier d'au moins un onduleur (7) et un boîtier d'au moins un moteur électrique (9) sont raccordés l'un à l'autre.
